# EUROPEAN PATENT APPLICATION

(11) **EP 2 398 261 A1**
(43) Date of publication of application: **21.12.2011**
(21) Application number: 11004215.7
(22) Date of filing: 20.05.2011
(51) Int. Cl.: H04W 4/22, H04W 4/14

(54) **Prioritization of emergency sms messages**

(30) Priority: 18.06.2010 US 818428
(71) Applicant: Sony Ericsson Mobile Communications AB, 221 88 Lund (SE)
(72) Inventor: Lohr, Jonathan, Charles, Cary, NC 27511 (US)
(74) Representative: Banzer, Hans-Jörg

(57) **Abstract**

A method and apparatus for delivering emergency SMS messages minimizes processing delays and to ensure delivery of SMS message even when SMS services are otherwise unavailable to a mobile station. New message type indicators for the RP-DATA in the SM-RL and for the CP-DATA message in the CM sublayer are defined to indicate messages that contain emergency SMS data to significantly increase the chances that a message will be delivered even when the network is congested. Also, new service type is defined for emergency SMS messages in the MM sublayer to remove many of the restrictions that could prevent a message from being delivered.

## Description

### BACKGROUND

The present invention relates generally to an emergency short message service for wireless networks and, more particularly, to the prioritization of emergency SMS messages in the wireless network.

Emergency circuit-switched (CS) voice calls have been supported in GSM (Global System for Mobile Communications) networks from the beginning and has been carried forward into the 3GPP (3rd Generation Partnership Project) specifications for GSM. In the case of voice calls, priority is given to the signaling so that emergency calls can be completed even when the network is congested. Caller identification and location as passed to the emergency dispatch center so that emergency personnel can quickly respond.

Although SMS is a widely popular service, current specifications do not support emergency procedures for SMS messages. While it is known to send emergency SMS messages to an emergency center, the emergency SMS messages are not prioritized over non-emergency messages.

There are circumstances where an emergency SMS message may be preferred over a conventional emergency voice call. Recent shootings at schools such as Columbine High School and Virginia Tech provide one example where emergency SMS messages may be useful. During the shootings, the wireless networks may become heavily congested when law enforcement personnel, journalists, news reporters, and frantic parents place voice calls. Students hiding from the attacker may be afraid to place voice calls out of fear of giving away their position. In this situation, an emergency SMS message could be sent silently to alert law enforcement and parents of the students' location. However, there is no guarantee that the emergency SMS message will be promptly delivered in the current system. Therefore, there is a need for procedures to ensure rapid delivery of emergency SMS messages to emergency centers.

### SUMMARY

The present invention provides a method as defined in claim 1 or claim 11 and apparatus as defined in claim 7 or claim 13 for delivering emergency SMS messages. The dependent claims define preferred embodiments of the invention. New signaling protocols and message handling procedures are defined to minimize processing delays and to ensure delivery of SMS message even when SMS services are otherwise unavailable to a mobile station. New message type indicators are defined to indicate messages that contain emergency SMS data to significantly increases the chances that a message will be delivered even when the network is congested. Also, new service type is defined for emergency SMS messages to remove many of the restrictions that could prevent a message from being delivered.

Exemplary embodiments of the invention comprise methods of transmitting an emergency SMS message. One exemplary method message comprises encapsulating SMS data in a data message at a sending node; inserting an emergency indicator into said data message; and sending said data message with said emergency indicator from said sending node to a receiving node.

In one embodiment, the method is performed by a short message relay function at the sending node.

In one embodiment, sending said data message comprises, sending a transfer request from said short message relay function to a connection management function at the sending node for transfer to said receiving node.

In one embodiment, the method is performed by a connection management function at a sending node.

In one embodiment, sending said data message comprises, sending a transfer request containing an a emergency service type indicator from said connection management function at the sending node to a mobility management relay function at said sending node for transfer to said receiving node.

One embodiment of the method further comprises invoking an emergency mobility management procedure by said mobility management function at said sending node responsive receipt of said transfer request.

Other exemplary embodiments of the invention comprise a communication device for transmitting an emergency SMS message. The communication device according to one embodiment comprises processing circuit including an SMS module configured to encapsulate SMS data in a data message at a sending node; insert an emergency indicator into said data message; and transmit said data message with said emergency indicator from said sending node to a receiving node.

In one embodiment of the communication device, the SMS module comprises a short message relay function.

In one embodiment of the communication device, the short message relay function sends said data message by sending a transfer request from said short message relay function to a connection management function at the sending node for transfer to said receiving node.

In one embodiment of the communication device, the SMS module comprises a connection management function.

In one embodiment of the communication device, the connection management function sends said data message by sending a transfer request containing an a emergency service type indicator from said connection management function at the sending node to a mobility management relay function in said SMS module for transfer to said receiving node.

In one embodiment of the communication device, the mobility management function is configured to invoke an emergency mobility management procedure responsive receipt of a transfer request containing an emergency service type indicator.

Another embodiment of the invention comprises a method of receiving an emergency SMS message. One exemplary receiving method comprises receiving SMS data encapsulated in a data message; detecting an emergency indicator in said data message; and invoking priority handling procedures for said SMS data responsive to the detection of said emergency indicator.

In some embodiments, the method is performed by a short message relay function at the receiving node.

In some embodiments, the method is performed by a connection management function at the receiving node.

Other exemplary embodiments of the invention comprise a communication device for receiving an emergency SMS message. IN one embodiment, said communication device comprising a processing circuit having SMS module configured to receive SMS data encapsulated in a data message; detect an emergency indicator in said data message; and invoke an emergency handling procedure for said SMS data responsive to the detection of said emergency indicator.

In some embodiments of the communication terminal, the SMS module comprises a short message relay function.

In some embodiments of the communication terminal, the SMS module comprises a connection management function.

### BRIEF DESCRIPTION OF THE DRAWINGS

Fig. 1 illustrates entities in a system for sending and receiving emergency SMS messages.

Fig. 2 illustrates an exemplary protocol stack for transfer of emergency SMS messages between a mobile station and a network service center.

Figs. 3 and 4 illustrate the delivery data message containing emergency SMS data.

Fig. 5 illustrates an exemplary method for delivering emergency SMS messages.

Fig. 6 illustrates a short message entity (e.g., mobile station or computer) for sending and/or receiving emergency SMS messages.

### DETAILED DESCRIPTION

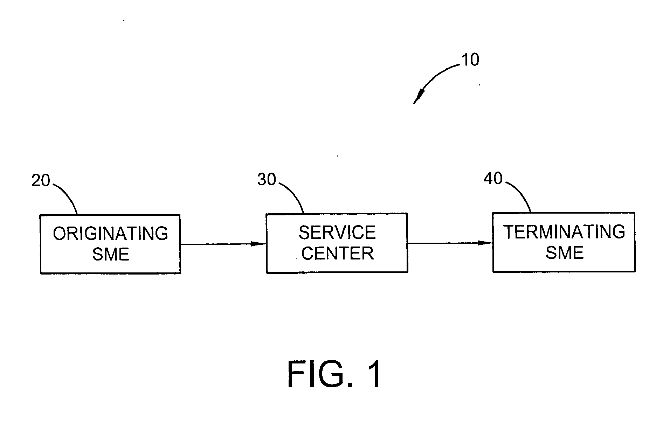

Fig. 1 illustrates the main functional components of a communication network 10 for delivery of SMS messages. The communication network 10 includes an originating short message entity (SME) 20, a network service center (SC) 30, and a terminating SME 40. The originating SME 20 may comprise any device capable of sending an SMS message. For purposes of illustrating the present invention, it is presumed that the originating SME is a mobile station in a circuit-switched (CS) network. Similarly, the terminating SME can be any entity capable of receiving SMS messages. The terminating SME could be another mobile station or a communication device connected to a fixed network (e.g., computer). In the illustrative embodiment, it is presumed that the terminating SME is a communication device located in an emergency center 50. The network service center 30 is a function located in the wireless Communication network that is responsible for relaying, storing, and forwarding of SMS messages. The network service center could be implemented within a mobile switching center (MSC) or other network node.

When the mobile station 20 originates an SMS message, the mobile station 20 establishes a connection with the network service center 30 and transfers the SMS message to the network service center 30. The network service center 30 may relay the SMS message if the terminating SME40 is available. Alternatively, the service center 30 may store the SMS message for forwarding at a later time if the terminating SME 40 is unavailable. In the case where the terminating SME 40 is located in an emergency center 50, the terminating SME 40 is likely to be available at all times. Therefore, the emergency SMS message could be relayed immediately in most cases, but will be subject to processing delays at the mobile station 20 and network service center 30. Also, there may be circumstances where SMS services are not normally available to the mobile station 20, such as when a mobile station 20 lacks a SIM card or where the subscriber has limited services in a particular area.

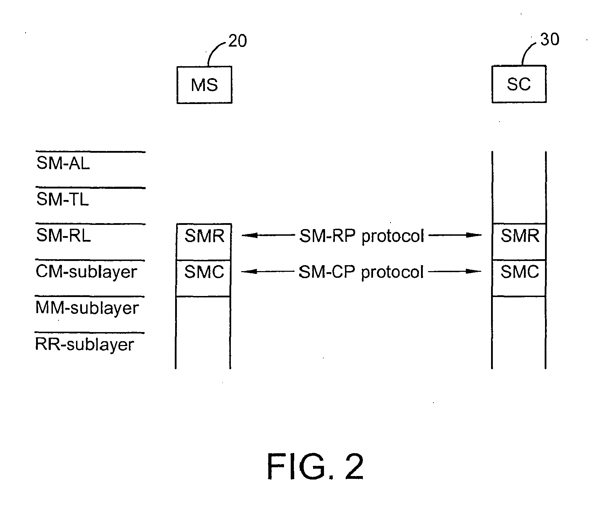

Fig. 2 illustrates the protocol architecture for delivery of SMS messages in a circuit-switched network 10, such as a GSM network. The protocol layers for SMS services include the short message application layer, the short message transport layer, the short message relay layer (SM-RL), and the short message link layer (SM-LL). The short message link layer includes the connection management sublayer (CM), and the mobility management (MM) sublayer. In the SM-RL layer, peer entities called short message relays (SMRs) in the mobile station 20 and service center 30 communicate with one another using the short message relay protocol (SM-RP). In the connection management sublayer, peer entities called short message control entities (SMCs) in the mobile station 20 and service center 30 communicate using the short message control protocol (SM-CP). The SM-RL procedure implemented by the SMR entities and CM procedures implemented by the SMC entities are described in 3GPP TS 24.011 V.9.0.0 (December 2009), Point-to-Point (PP) Short Message Service (SMS) Support On Mobile Radio Interface (hereinafter TS 24.011), which is incorporated herein in its entirety by reference.

The basic process for sending an SMS message from an originating mobile station 20 is as follows. When the SM-AL in the mobile station 20 sends an SMS message to a peer entity in the service center 30, the SM-TL layer creates a transport protocol data unit (TPDU) containing the SMS data. The SM-TL layer requests the SM-RL layer to transfer the TPDU to a peer entity in the service center 30. The SMR function in the SM-RL layer implements a relay procedure to relay the TPDU using the short message relay protocol. When an SMR function at the SM-RL layer receives a request from the SM-TL to relay a TPDU, it forms and transfers an RP-DATA message containing the TPDU in its payload and transfers the RP-DATA message to a peer SMR function at the service center 30. The SMR communicates with a peer SMR using a CM connection. Multiple CM connections may be established at the same time, allowing parallel transactions. The SMC entity at the CM sublayer forms a CP-data message, with the user information element being the RPDU, and transfers the CP-data message by means of lower layer services. When the SMC function is in the idle state and transfer of an RPDU is requested, a peer-to-peer connection between the MM sublayers in the mobile station 20 and network service center 30 needs to be established. Once the MM connection is established, the SMC function forwards the CP-DATA message containing the RPDU to the peer SMC function in the network service center.

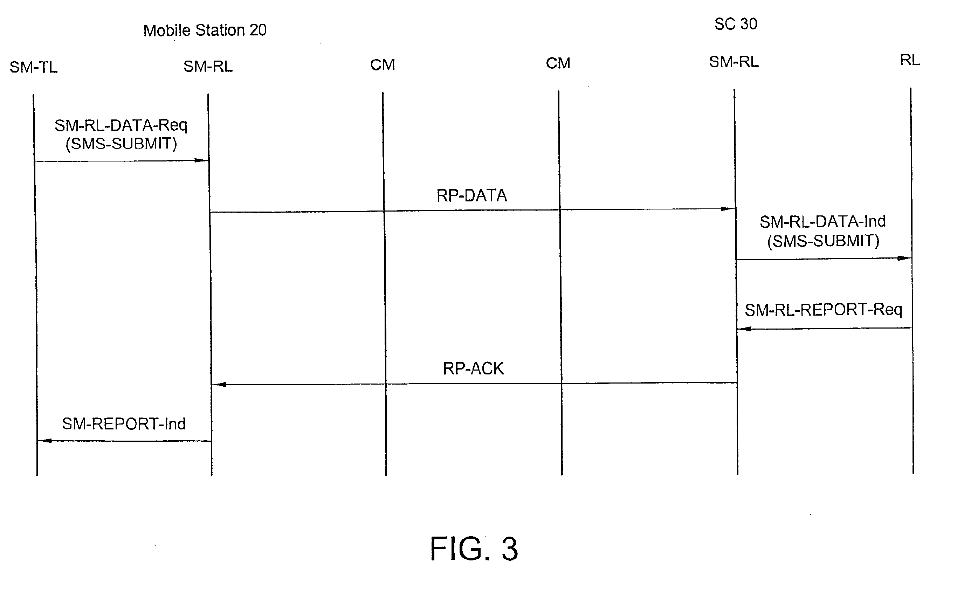

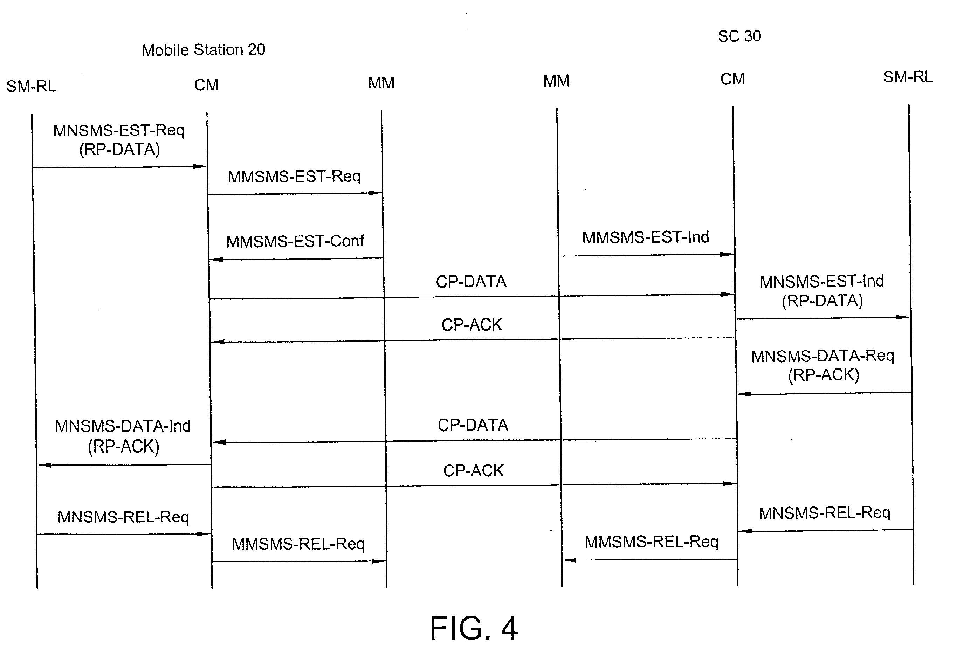

Fig. 3 illustrates the transfer of the RP-DATA message containing a TPDU between peer SMR entities at an originating mobile station 20 and service center 30 respectively. The SM-TL layer requests transfer of a TPDU containing SMS data by sending an SM-RL-DATA-Req message (SMS SUBMIT) message to the SM-RL layer. The SMR at the SM-RL layer generate an RP-DATA message with the TPDU as its payload and sends the RP_DATA message to a peer SMR function at the network center 30. As described in more detail below, the SMR implementing the TPDU relay procedure uses the services of the CM sublayer to transfer the RP-DATA message. The SMR at the SM-RL layer can request the CM sublayer to transfer the RP-DATA message by sending a an MNSMS data request message to the SMC at the CM sublayer (see Fig. 4). On the network side, the peer SMR at the network service center receives the RP=DATA message. The SMR at the network service center 30 extracts the TPDU and passes the TPDU to the SM-TL layer in an SM-=RL-DATA-Ind (SMS SUBMIT) message. The SM-TL layer sends an SM-RL-REPORT-Req message back to the SM-RL layer, which in turn sends an RP-ACK message to acknowledge receipt of the RP-DATA message. The SM-RL layer at the mobile station 20 then sends an SM-RL-REPORT-Ind message to the SM-TL to indicate that the TPDU was successfully delivered.

Fig. 4 illustrates the transfer of the CP-DATA message containing an RP-DATA message between peer SMR entities at an originating mobile station 20 and service center 30 respectively. The SM-RL passes the RP-DATA message to the CM sublayer in a transfer request message. More particularly, the SM-RL layer sends a MNSMS-EST-Req. as described in TS 24.011, Sec. 3.2.1.4, to the CM sublayer to request establishment of a CM connection. The request includes the RP-DATA message as a parameter. The request triggers the establishment of a CM-connection for the SMR function, the formation of the CP-DATA message containing the RPDU, and the passing of the CP-DATA message to the MM sublayer. The CM sublayer requests establishment of a MM connection by sending an MMSMS-EST-Req to the MM sublayer. Once the MM connection is established, the CP-DATA is transferred to the peer SMC at the network service center 30 and the CM sublayer send a CP-ACK to the per CM entity at the mobile station 20 to acknowledge receipt of the CP-DATA message. The CM sublayer passes the RP-DATA message up to the SM-RL layer in an MNSMS-EST-Ind message as described in TS 24.011, sec. 3.2.1.5.

The SM-RL acknowledges the receipt of the RP-DATA message by sending an MNSMS EST-Req message with the RP-ACK message as a parameter as described in TS 24.011, sec. 3.2.1.2. The RP-ACK is transmitted back to the CM sublayer at the mobile station 20 in a CP-DATA message. The CM sublayer at the mobile station 20 then passes the RP-ACL up to the SM-RL sublayer in a MNSMS-DATA-Ind. message as described in TS 24.011, sec. 3.2.1.5, and sends a CP-ACK to acknowledge receipt of the CP-DATA message. The subsequent signaling, not relevant to the present invention, is to release the MM connection.

The standard procedures implemented in the SM-RL, CM sublayer, and MM sublayer do not provide any support for prioritization of emergency SMS messages. Thus, the delivery of SMS messages may be subject to significant processing delays. One of the objects of the invention is to reduce these processing delays. Also, there may be some CM and MM states in which SMS services are not normally available to the mobile station 20, such as when a mobile station 20 lacks a SIM card or where the subscriber has limited services in a particular area. Another of the objects of the invention is to ensure the delivery of SMS messages even when SMS services are not otherwise available to the mobile station 20.

According to one exemplary embodiment of present invention, the messages transfer between peer entities, and the primitives exchanged between the SM-RL, CM, and MM layers may be modified to enable the prioritization of emergency SMS messages. In one exemplary embodiment, the following modifications are made:
1) A new message type is defined for the RP-DATA message transferred between peer SMR entities;
2) A new message type is defined for CP-DATA messages transmitted between peer SMC entities; and
3) A new service-type information element is defined for certain requests sent by the CM layer to the MM layer.

The format of the RP-DATA message sent by the mobile station 20 to the network is described in TS 24.011, section 7.3.1.2. The RP-DATA message includes an RP-message type information element. This information element contains a three-bit message type indicator (MTI). The defined values for the MTI are specified in TS 24.011, section 8.2.2. For convenience, the defined MTI values are set forth in Table 1 below:

**Table 1 - Message Type Indicator for RP-DATA message**

| **Bit value** 321 | **Direction** | **RP-Message** |
|---|---|---|
| 000 | ms -> n | RP-DATA |
| 000 | n -> ms | Reserved |
| 001 | ms -> n | Reserved |
| 001 | n -> ms | RP-DATA |
| 010 | ms -> n | RP-ACK |
| 010 | n -> ms | Reserved |
| 011 | ms -> n | Reserved |
| 011 | n -> ms | RP-ACK |
| 100 | ms -> n | RP-ERROR |
| 100 | n -> ms | Reserved |
| 101 | ms -> n | Reserved |
| 101 | n -> ms | RP-ERROR |
| 110 | ms -> n | RP-SMMA |
| 110 | n -> ms | Reserved |
| 111 | ms -> n | Reserved |
| 111 | n -> ms | Reserved |

According to the present invention, a new message type referred to herein as RP-DATA-EMERGENCY may be defined and use one of the reserved values for the MTI. For example, the value "001" for the MTI could be used to indicate an RP-DATA-EMERGENCY message so that the message can receive priority treatment by the CM sublayer at the originating mobile station 20 and receiving SMR function at the network service center 30.

Similar modifications can be made to the CP-DATA message. The format of the CP- DATA message is specified in TS 24.011, section 7.2.1. Like the RP- DATA message, the CP- DATA message includes a message type information element containing a message type indicator. The message type indicator, together with the protocol discriminator, identifies the function of the message being sent. The defined message type indicators for the CP- DATA message are specified in TS 24.11, section 8.1.3. The defined message types are shown in Table 2 below.

**Table 2 - Message Type Indicators CP-DATA Message**

| | |
|---|---|
| 8 7 6 5 4 3 2 1 | |
| | |
| 0 0 0 0 0 0 0 1 | CP-DATA |
| 0 0 0 0 0 1 0 0 | CP-ACK |
| 0 0 0 1 0 0 0 0 | CP-ERROR |

According to one aspect of the present invention, a new message type called CP-DATA -emergency may be defined using a value such as "00000111." The new message type informs the receiving SMC entity at the network service center 30 to give priority treatment to the CP- DATA -emergency message.

According to another aspect of the present invention, the signaling between the CM and MM entities at the originating mobile station 20 is modified to provide an emergency indication to the MM sublayer. Note that the CM sublayer gets an emergency indication from the MTI in the RP-DATA message. However, the MM sublayer does not examine the CP-DATA message and is therefore unaware of the emergency. As previously noted, the SMC at the CM layer sends an MMSMS-EST-REQ to the MM layer to request establishment of an MM connection for transfer of a CP-DATA message. There are certain MM states where SMS services are not normally allowed, such as when a mobile station 20 lacks a SIM card or where the subscriber has limited services in a particular area. In one embodiment, an emergency indication is included in the MMSMS-EST-REQ message to notify the MM sublayer of the emergency. The service request message sent by the CM layer to the MM layer contains a CM service type information element which is defined in TS 24.008, section 10.5.3.3. The service type information element contains a four-bit service type indicator. The defined values for the service type indicator are shown in Table 3 below.

**Table 3: Service Type information element**

| Service type (octet 1) | | | | |
|---|---|---|---|---|
| Bits | | | | |
| **4** | **3** | **2** | **1** | |
| 0 | 0 | 0 | 1 | Mobile originating call establishment or packet mode connection establishment |
| 0 | 0 | 1 | 0 | Emergency call establishment |
| 0 | 1 | 1 | 0 | Short message service |
| 1 | 0 | 0 | 0 | Supplementary service activation |
| 1 | 0 | 0 | 1 | Voice group call establishment |
| 1 | 0 | 1 | 0 | Voice broadcast call establishment |
| 1 | 0 | 1 | 1 | Location Services(NOTE) |
| | | | | |
| All other values are reserved. | | | | |
| NOTE: this service type shall only be used by a type A LMU if the MM connection was requested for the transmission of LCS signalling messages specified in 3GPP TS 44.071 [23a]. | | | | |

According to one aspect of the present invention, a new service type, emergency short message service, is defined and may be designated by one of the reserved STI values. For example, the value "1111" may be used to indicate the emergency short message service. This indicator instructs the MM layer to use the same procedures that apply to emergency voice calls for the emergency SMS service. These procedures are described in TS 24.008, section 4.5.1.5. Thus, in the event of an emergency, the MM sublayer will allow delivery of emergency SMS messages regardless of the MM state.

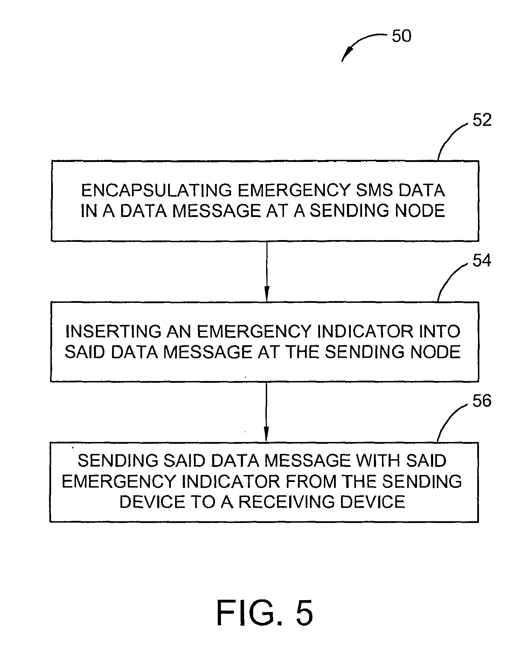

Fig. 5 illustrates an exemplary method for transferring SMS data according to one embodiment of the present invention. The method may be implemented at either one or both of the SM-RL layer and CM sublayer. The method comprises encapsulating SMS data in a data message at the sending node, inserting an emergency indicator into the data message, and sending the data message with the emergency indicator from the sending node to a receiving node. At the SM-RL layer, the SMS data is contained in a TPDU, which is encapsulated in the RP-DATA message. A message type indicator is inserted in the RP-data message to indicate that the RP-DATA message is an emergency RP-DATA message. Similarly, at the CM sublayer, the SMS data is contained in the RP-DATA message, which encapsulates the TPDU. The CM sublayer encapsulates the RP- DATA message in a CP- DATA message and inserts a message type indicator into the CP-DATA message to indicate an emergency CP-DATA message. Thus, the CM sublayer at the receiving node will be notified of the emergency and can process the CP-DATA message accordingly.

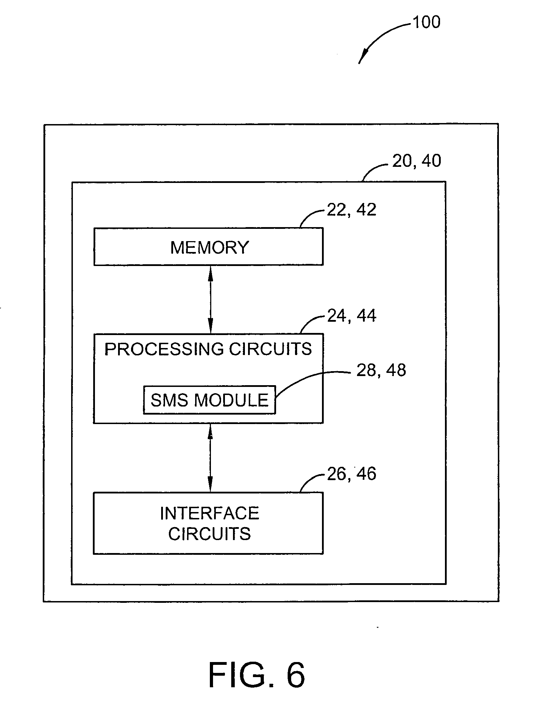

Fig. 6 illustrates an SME 20, 40 to send and/or receive SMS messages. The SME 20, 40 may be embodied, for example in a communication terminal 100 comprising memory 22, 42, processing circuits , memory 24, 44, and interface circuits 26, 46. The processing circuits 24, 44 execute program codes stored in memory 22, 42 to implement the SMS delivery protocols as described herein. In particular, the processing circuit 24, 44 includes a SMS module 28, 48 to implement the protocol stack as shown in Fig. 2 and the emergency procedure for SMS messages as shown in Fig. 4. The interface circuits 26, 46 enable the communication terminal 100 to send or receive SMS messages, or both. In the case of an originating SME (e.g., mobile station) 20, the interface circuit 26 may comprise a cellular transceiver configured according to any known standard, such as the GSM or GPRS standards. For a terminating SME 40, the communication terminal 100 may comprise a computer that interfaces to a fixed network. The interface 46 may be a wired or wireless interface.

Although the present invention has been described in the context of a mobile-originated short message, those skilled in the art will appreciate that the same procedures could be applied to a mobile-terminated short message.

The present invention may, of course, be carried out in other specific ways than those herein set forth without departing from the scope and essential characteristics of the invention. The present embodiments are, therefore, to be considered in all respects as illustrative and not restrictive, and all changes coming within the meaning and equivalency range of the appended claims are intended to be embraced therein.

## Claims

1. A method of transmitting an emergency SMS message, said message comprising:
encapsulating SMS data in a data message at a sending node (20);
inserting an emergency indicator into said data message; and
sending said data message with said emergency indicator from said sending node (20) to a receiving node (40).

2. The method of claim 1 performed by a short message relay function at the sending node (20).

3. The method of claim 2 wherein sending said data message comprises, sending a transfer request from said short message relay function to a connection management function at the sending node (20) for transfer to said receiving node (40).

4. The method of claim 1 performed by a connection management function at a sending node (20).

5. The method of claim 4 wherein sending said data message comprises, sending a transfer request containing an a emergency service type indicator from said connection management function at the sending node (20) to a mobility management relay function at said sending node (20) for transfer to said receiving node (40).

6. The method of claim 5 further comprising invoking an emergency mobility management procedure by said mobility management function at said sending node (20) responsive receipt of said transfer request.

7. A communication device (100) for transmitting an emergency SMS message, said communication device (100) comprising a processing circuit (24) including a SMS module (28) configured to:
encapsulate SMS data in a data message at a sending node (20);
insert an emergency indicator into said data message; and
transmit said data message with said emergency indicator from said sending node (20) to a receiving node (40).

8. The communication device (100) of claim 7 wherein the SMS module (28) comprises a short message relay function that is configured to send a transfer request to a connection management function at the sending node (20) for transfer to said receiving node (40).

9. The communication device (100) of claim 7 or claim 8 wherein the SMS module (28) comprises a connection management function at the sending node (20) that is configured to send a transfer request containing an a emergency service type indicator to a mobility management relay function in said SMS module (28) for transfer to said receiving node (40).

10. The communication device (100) of claim 9 wherein said mobility management function is configured to invoke an emergency mobility management procedure responsive receipt of a transfer request containing an emergency service type indicator.

11. A method of receiving an emergency SMS message, said method comprising:
receiving SMS data encapsulated in a data message of a receiving node (40);
detecting an emergency indicator in said data message; and
invoking priority handling procedures for said SMS data responsive to the detection of said emergency indicator.

12. The method of claim 11 performed by one of a short message relay function at the receiving node (40) and a connection management function at the receiving node (40).

13. A communication device (100) for receiving an emergency SMS message, said communication device (100) comprising a processing circuit (44) including a SMS module (48) configured to:
receive SMS data encapsulated in a data message;
detect an emergency indicator in said data message; and
invoke an emergency handling procedure for said SMS data responsive to the detection of said emergency indicator.

14. The communication device (100) of claim 13 wherein the SMS module comprises a short message relay function.

15. The communication device (100) of claim 13 wherein the SMS module comprises a connection management function.
